# EUROPEAN PATENT SPECIFICATION

(11) **EP 1 494 895 B1**
(45) Date of publication and mention of the grant of the patent: **14.02.2007**
(21) Application number: 03723542.1
(22) Date of filing: 04.04.2003
(51) Int. Cl.: B60R 21/34

(54) **A SAFETY DEVICE TO LIFT THE REAR PART OF THE BONNET OR HOOD OF A MOTOR VEHICLE**
SICHERHEITSVORRICHTUNG ZUM ANHEBEN DES HINTEREN TEILS DER MOTORHAUBE EINES KRAFTFAHRZEUGS
DISPOSITIF DE SECURITE PERMETTANT DE LEVER LA PARTIE ARRIERE DU CAPOT D'UN VEHICULE A MOTEUR

(30) Priority: 17.04.2002 GB 0208798; 03.12.2002 GB 0228180
(43) Date of publication of application: 12.01.2005
(73) Proprietor: AUTOLIV DEVELOPMENT AB, 447 83 Vargarda (SE)
(72) Inventor: KNIGHT-NEWBURY, Heath, Brighton BN1 3FT (GB); HAGLUND, Lennart, S-447 32 Vargarda (SE); SVANTESSON, Anders, S-448 50 Tollered (SE); LINDBLAD, Karl-Gunnar, S-447 31 Vargarda (SE)
(74) Representative: Parry, Simon James
(86) International application number: PCT/SE2003/000538
(87) International publication number: WO 2003/086826

(56) References cited:
- EP-A2- 1 293 400
- EP-A2- 1 295 763
- DE-A1- 10 039 755
- DE-A1- 10 102 597
- DE-A1- 10 116 717
- DE-A1- 19 712 961
- DE-A1- 19 721 565
- US-A1- 2002 014 367

## Description

**THE PRESENT INVENTION** relates to a safety device, and more particularly relates to a safety device to be mounted on a vehicle to provide protection for a pedestrian struck by the vehicle in an accident situation.

If a pedestrian is struck by a vehicle in an accident situation, the pedestrian may be thrown in such a way that the head or torso of the pedestrian impacts with the hood or bonnet of the motor vehicle. The hood or bonnet of the motor vehicle may deform as a consequence of such impact, but, if the hood or bonnet is closed, the hood or bonnet may only deform by a very short distance before the underside of the hood or bonnet will engage with part of the engine located under the hood or bonnet.

Consequently it has been proposed to provide a mechanism which, in response to the sensing of an impact with a pedestrian, partially raises the hood or bonnet of the vehicle. Thus, when the pedestrian impacts with the hood or bonnet, the hood or bonnet is able to deform over a substantial distance before the underside thereof engages with the engine. During this extensive deformation of the hood or bonnet, the head or torso of the pedestrian may be decelerated appropriately, relative to the vehicle, without substantial injury arising.

Various arrangements have been proposed to raise the rear part of the bonnet or hood in response to an accident situation involving an impact with a pedestrian. Typically, however, a bonnet or hood is raised for servicing purposes about hinges provided at the rear part of the bonnet. Consequently it has been necessary to devise special hinge arrangements which firstly enable the bonnet to be lifted in the normal way, about a pivot axis defined at the rear of the bonnet or hood by the hinges, and which secondly permit the rear part of the bonnet to be raised in an accident situation.

EP-A-0967128 discloses an arrangement with the features of the preamble of claim 1. In the embodiments described in this Specification, the rear part of the bonnet or hood is mounted on pivot pins which constitute hinge pins at the rear edge of the hood or bonnet. The pivot pins are received within a vertical channel having an enlarged lower part, one side-wall of the channel being defined by a member which is pivotally connected to the member defining the other side-wall of the channel, the pivotally mounted member being spring-biased so that the channel has a minimum width. The minimum width of the channel is less than the diameter of the pin, apart from in the lower part of the channel. Thus, the pin is retained within the lower part of the channel, but can be released from the channel when subjected to a substantial upward force, the pivotally mounted member defining said one side-wall, the channel then moving slightly against the spring-bias. An arrangement of this type may become disconnected if the rear of the hood or bonnet is subjected to a sudden upward force, for example when travelling along a very uneven road.

DE-A-19957872 discloses another arrangement in which the pivot point about which the hood or bonnet is hinged to the main part of a vehicle is itself provided at the free end of a pivotally mounted arm. In an initial position of the pivotally mounted arm, the hood or bonnet may be opened or closed in a conventional manner. However, in response to an accident situation, an actuator may move the pivotally mounted arm, thus raising the pivot point about which the rear part of the hood or bonnet is connected to the main part of the vehicle. As a consequence, the rear part of the hood or bonnet itself is lifted up. Such an arrangement is relatively complicated.

GB-A-2,354,797 discloses a further hinge arrangement in which the pivot point about which the bonnet usually pivots is connected to the main part of the car by means of a pivotally mounted arm. The pivotally mounted arm is held in a normal position by a catch member, but can pivot to a position in which the rear part of the hood or bonnet is raised, upon release of the catch member. The catch member is adapted to release itself whenever the rear part of the hood or bonnet is subjected to a substantial upward force. Again, an arrangement of this type may malfunction in that the rear part of the bonnet may rise if, for example, the vehicle is travelling along a very uneven road.

A further problem that may be encountered with the arrangements described in DE-A-19957872 and GB-A-2,354,797, is that the rear portion of the bonnet may be constrained to move substantially vertically upwardly. If the bonnet has a latch at the front which normally retains the bonnet in a closed position, that front latch may not permit such vertical movement of the rear part of the bonnet, unless a specially designed latch is provided which is permitted to move appropriately. If such a latch is provided, the consequent movement of the hood or bonnet may reveal hard parts of the underlying chassis in the region where the pedestrian may strike the car. Alternatively, of course, the latch may break if subjected to an over-large force.

The present invention relates to a safety device of the type intended to lift a hood or bonnet in response to an accident situation involving an impact with a pedestrian.

According to this invention there is provided a safety device to lift the rear part of the hood or bonnet of a motor vehicle according to claim 1, the safety device including a pivotal connection for connecting the rear part of the hood or bonnet to the main part of the vehicle to permit the front part of the hood or bonnet to be opened, part of the pivotal connection being formed on a hinge arm incorporated in a hinge extending between a mount to be mounted on a hinge or bonnet and a mount to be mounted on the main part of the vehicle, there being a catch to retain the hinge arm in a first condition relative to one mount, the safety device further incorporating a lifting element to lift the rear part of the head or bonnet, there being a mechanism to release the catch directly in response to actuation of the lifting element so that the hinge arm can move relative to the mount to permit the rear part of the hood or bonnet to be raised when the lifting element is actuated, wherein the lifting element comprises a canister, there being two lugs provided on the canister, the lugs being adapted to become separated in response to actuation of the lifting element, said catch being released as a consequence of the movement of the lugs.

Preferably the catch incorporates a moveable element, the moveable element being moveable directly in response to actuation of the lifting element.

Conveniently the lifting element comprises an inflatable element, there being a gas generator to generate gas to inflate the inflatable element, the moveable element being moveable in response to the generation of gas, as a consequence of the movement of the lugs.

Conveniently a Bowden cable is provided, the Bowden cable having a core thereof extending through said two lugs, so as to apply tension to the Bowden cable when the lugs become separated, one end of the Bowden cable being connected to the moveable element.

Preferably the other end of the Bowden cable is attached to a manually actuable lever.

According to the invention the lifting element comprises a canister containing an inflatable sleeve, the side wall of the canister defining at least one line of weakness passing between said two lugs, the arrangement being such that in response to inflation of the sleeve the canister ruptures and the lugs move apart.

Advantageously the hinge has a single hinge arm extending between the said two mounts, one arm of the hinge being connected to one mount by means of a co-operating stud and slot, the catch retaining that end of the hinge arm in a predetermined position relative to the said one mount, the other end of the hinge arm being pivotally connected to the other mount.

Conveniently the slot is provided on the hinge arm and the stud is provided on the mount.

In one embodiment a resiliently biased locking arm is provided, the locking arm being moveable from an initial position to a locking position when the stud is moved to one end of the slot, the arm, in the locking position, serving to retain the stud at that one end of the slot.

Conveniently the locking arm is spring biased by a tension spring, part of the tension spring being connected to the catch such that tension is applied to the spring when the catch is moved to the release position.

In some embodiments of the invention the catch is a rotatable catch.

Advantageously the rotatable catch is connected to the Bowden cable.

In order that the invention may be more readily understood, and so that further features thereof may be appreciated, the invention will now be described, by way of example, with reference to the accompanying drawings in which:
FIGURE 1 is a respective view of a canister containing an inflatable sleeve to form part of a safety device in a motor vehicle,
FIGURE 2 is a sectional view through the upper part of the canister of Figure 1,
FIGURE 3 is a view of the canister of Figure 1 illustrating the canister when the safety device is being deployed,
FIGURE 4 is a perspective view of a hinge structure,
FIGURE 5 is a diagrammatic side view of part of a motor vehicle incorporating a safety device which includes the canister of Figure 1 and the hinge structure of Figure 4 in an ordinary condition,
FIGURE 6 is a view corresponding to Figure 5 illustrating the safety device in the deployed condition,
FIGURE 7 is a side view of an alternative hinge structure,
FIGURE 8 is a view corresponding to Figure 7 showing the hinge structure in the deployed position,
FIGURE 9 is a perspective view of an alternative arrangement not forming part of the claimed invention,
FIGURE 10 is a cross-sectional view of part of the arrangement of Figure 9,
FIGURE 11 is a plan view of that part of the arrangement of Figure 9 as shown in Figure 10,
FIGURE 12 is a side view of an alternative arrangement not forming part of the claimed invention,
FIGURE 13 is a sectional view of part of the arrangement of Figure 12,
FIGURE 14 illustrates the arrangement of Figure 12 in an alternative condition after actuation of the safety device,
FIGURE 15 is a view corresponding to Figure 13, showing an alternative, modified arrangement, and
FIGURE 16 is a sectional view of a piston and cylinder unit for use in another arrangement not forming part of the claimed invention.

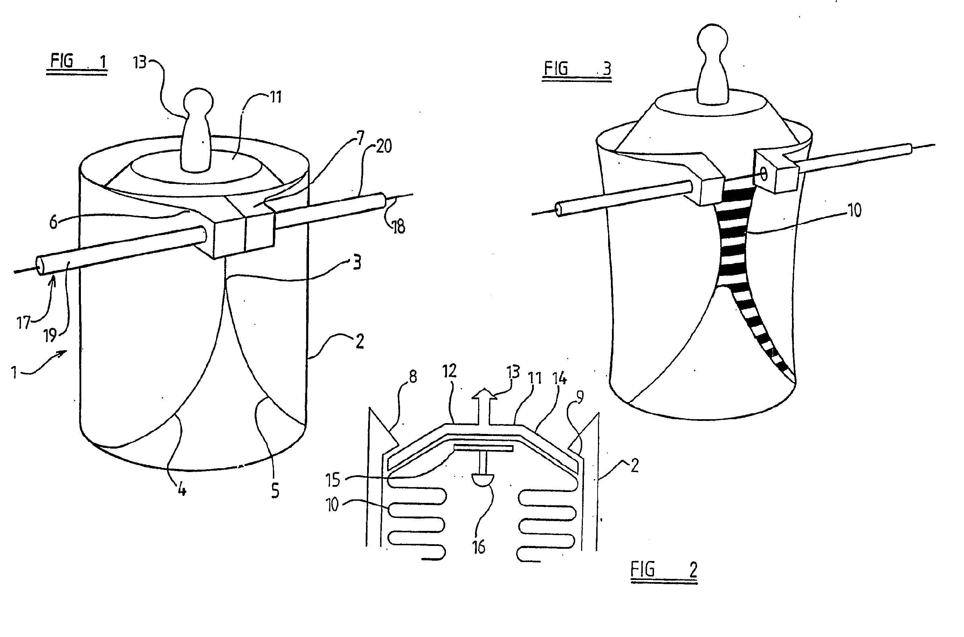

Referring initially to Figures 1 to 3, a canister 1 forms a lifting element which can be actuated to lift the rear part of a bonnet or head of a motor vehicle. The canister 1 comprises a generally cylindrical housing 2 formed, for example, of a plastics material. The cylindrical housing 2 has at least one line of mechanical weakness 3 formed in the side wall thereof, the preferred arrangement of lines of mechanical weakness having three lines of mechanical weakness 3, 4, 5, which are of generally inverted "Y"-shaped configuration, with the line of weakness 3 extending vertically towards the very top of the side-wall of the housing. At the top of the side-wall of the canister, on opposed sides of the vertical line of weakness 3, are radially outwardly protruding apertured lugs 6, 7.

At the upper part of the side-wall of the housing 2, as shown in Figure 2, there is provided an inner rim 8, the inner rim 8 having an inwardly inclined under-surface 9.

Contained within the canister is a fabric sleeve 10. The sleeve 10 is, in the described embodiment, initially folded in a "concertina" manner.

The upper-most part of the sleeve 10, contained within the canister 1, is provided with an upper cap 11. The upper cap 11 has a central planar region 12 which carries an upwardly extending barbed prong 13. Surrounding the planar region 12 is a downwardly inclined peripheral annular region 14, the outer-most peripheral part of which firmly abuts and engages the inclined under-surface 9 of the rim 8 provided on the side-wall of the housing 2. The cap 11 may be secured to the upper part of the fabric sleeve 10 by means of a mounting plate 15 provided within the terminal part of the sleeve 10 which is secured to the cap 11 by means of a screw 16.

A pyrotechnic charge is provided within the canister adapted to inflate the sleeve 10. The lower part of the canister may be provided with a bayonet mounting which can be used to mount the canister in position (as will be described hereinafter) and also to provide electrical contacts to an ignition squib provided within the pyrotechnic charge which is to inflate the sleeve 10.

As shown in Figure 1, a Bowden cable 17 may be associated with the canister. The inner core 18 of the cable will pass through the co-aligned apertures formed in the radially outwardly directed lugs 6 and 7. Sleeve parts 19, 20 of the cable will abut against the exterior parts of the lugs 6 and 7.

It is to be understood that, upon deployment of the safety device, the pyrotechnic charge associated with the sleeve 10 will be ignited, and gas will be injected into the sleeve 10. The sleeve 10 will thus begin to expand. The expansion of the sleeve 10 will cause the housing 2 of the canister 1 to rupture along the lines of mechanical weakness. This rupturing may be assisted by a generally upward force applied to the cap 11 which will cause the inclined peripheral portion 14 of the cap 11 to exert a force on the under-surface 9 of the rim 8 tending to cause the side-walls of the cylindrical housing 2 to distend outwardly, thus splitting the side-wall of the housing 2 along the line of mechanical weakness.

As can be seen in Figure 3, as the fabric sleeve 10 inflates and the cap 11 moves upwardly, so the two radially outwardly directed protrusions 6 and 7 on either side of the split-line 3 move apart which will effectively apply tension to the inner core 18 of the Bowden cable 17.

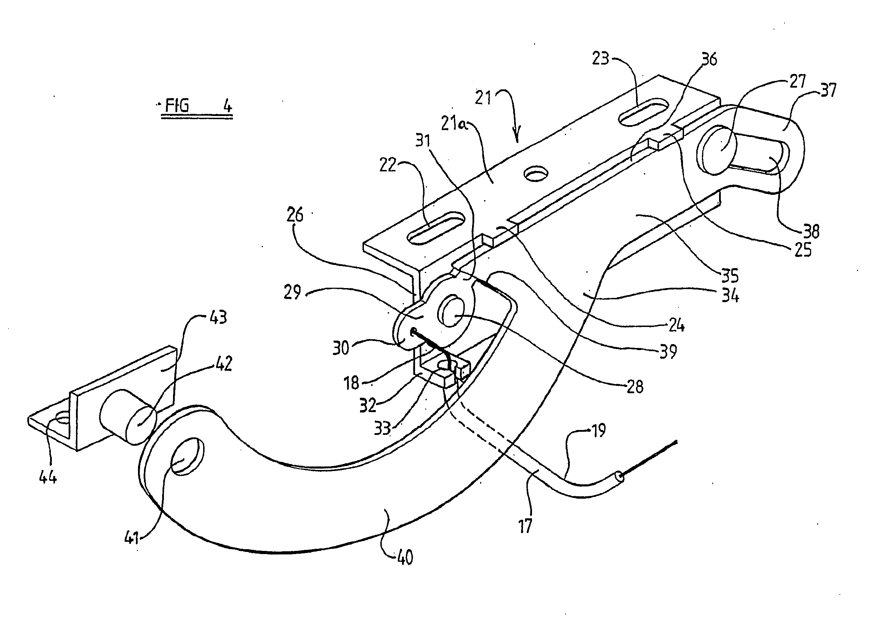

Turning now to Figure 4, a hinge assembly is illustrated, and it is to be understood that two hinge assemblies of this type will be used to mount the hood or bonnet of a motor vehicle in position, and each will be associated with a canister 1 as described above.

The hinge assembly comprises a mounting bracket 21 which incorporates a rectangular planar plate 21a provided with two spaced-apart mounting apertures 22, 23. The planar plate is adapted to be mounted to the under-side of a hood or bonnet by screws or the like passing through the two mounting apertures 22, 23. At one of the long side edges of the planar plate 21a, there are two outwardly extending lugs 24, 25. The lugs 24, 25 extend above and protrude beyond a depending wall 26 which depends from the said long side edge. A "T"-headed stud 27 extends perpendicularly from the depending wall 26 adjacent one end thereof, and a pivot 28 extends perpendicularly from the wall 26 adjacent the other end thereof. The pivot 28 pivotally supports a rotatable catch element 29 which forms part of a release mechanism. The catch element 29 has a first radially extending actuating arm 30 and a second radially extending retainer arm 31. The first actuating arm 30 is connected to the core 18 of the Bowden cable 17. The retainer arm 31 serves to retain part of hinge assembly in position, as will be described below.

Beneath the catch 29 is a horizontally protruding lug 32 which extends horizontally from the lower edge of the depending wall 26. The lug 32 is provided with a key-hole shaped recess 33 in one side edge thereof. The recess 33 is dimensioned so that the core 18 of the Bowden cable may pass through the recess, whilst the sleeve 19 of the Bowden cable engages the lug adjacent the recess. Tension applied to the core 18 of the Bowden cable will cause the catch 29 to rotate.

A hinge arm 34 is provided, the hinge arm having a first linear portion 35 which lies adjacent the depending plate 21a. A substantially linear or straight upper edge 36 of the linear portion 35 engages the under-surface of each of the lugs 24, 25. At one end of the linear part 35 there is an inclined extension 37 of the hinge arm, the extension 37 having an oval slot 3 8 therein. The slot 38 is inclined relative to the edge 36. The "T"-headed stud 27 passes through the slot 38. The stem of the stud is dimensioned to slide along the slot.

At the other end of the linear part 35 of the hinge arm 34, there is an inclined end surface 39 which is engaged by the retaining arm on the catch element 29. The end surface 39 is thus releasably connected to the bracket 20 which, in turn, is connected to the hood or bonnet. The inclined end surface 39 is located intermediate the two ends of the hinge arm. The arrangement is such that, with the catch element 29 in a latching position, as shown in Figure 4, the end face of the retaining arm 31 engages the inclined end face 39 of the linear portion 35 of the hinge arm 34, and consequently the hinge arm 34 is retained fast with the mounting bracket 20. However, if the catch element 29 is rotated in an anti-clockwise manner by tension applied to the core 18 of the Bowden cable 17, then the hinge arm 34 is released and may move relative to the bracket 20 whilst being restrained by the engagement between the "T"-headed stud 27 and the slot 38.

The linear portion 35 of the hinge arm 34 is connected to an elongate arcuate portion 40 of the hinge arm which terminates with a mounting aperture 41. The aperture 41 is dimensioned to receive a pivot pin 42 which is provided on a mounting bracket 43. The mounting bracket 43 is provided with apertures 44 to receive screws or the like, and the bracket 43 is configured to be mounted to the main part of the motor vehicle.

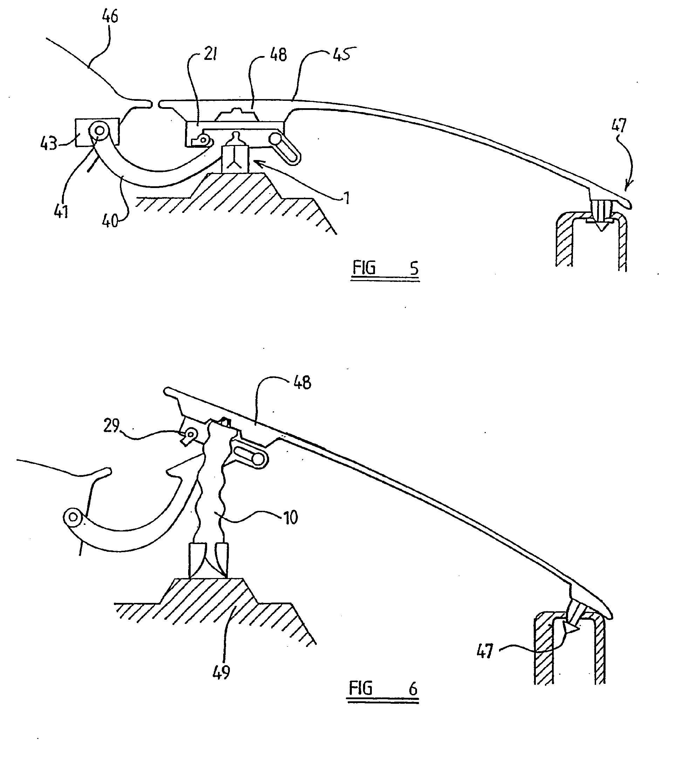

Referring now to Figure 5, part of a motor vehicle is illustrated. Figure 5 shows the hood or bonnet 45 of the motor vehicle, which is mounted in position in front of the windscreen or windshield 46. The forward-most end of the hood or bonnet is provided with a releasable catch 47, of conventional design, to release the hood or bonnet to provide access to the engine space beneath the hood or bonnet. Towards the rear of the hood or bonnet, the mounting plate 21 of a hinge assembly, as shown in Figure 4 is mounted to the under-side of the hood or bonnet, and the mounting bracket 43 is mounted on the main part of the motor vehicle adjacent the base of the windscreen 46. Two hinge assemblies will be provided, one on each side of the vehicle. A recess or 'socket' 48 is provided on the underside of the head or bonnet above each canister 1 to receive the barbed prong 13 when the safety device is deployed.

The free end of the Bowden cable 17 may be connected to an actuating lever provided on the interior of the motor vehicle or, alternatively, may be mounted to a fixed point.

A canister 1, as described above, is mounted in position beneath part of the head or bonnet adjacent the horizontal plate 21a of each bracket 21, being mounted in position appropriately, for example, by the described bayonet connection, on a firm or immovable part 49 of the motor vehicle. Thus there is a respective canister 1 on each side of the vehicle. The barbed prong 13 is located beneath the recess or socket 48. The hood or bonnet may be opened in the normal way by releasing the conventional catch 47 provided at the front of the hood or bonnet 45, and then lifting the forward-most edge of the hood or bonnet. The hood or bonnet will pivot about the pivot pin 42. The linear portion 35 of the hinge arm 34 will remain fast with the bracket 21, because it will be retained in this condition by a combination of the "T"-headed stud 27 at one end of the elongate slot 3 8, and the retaining arm 31 of the catch 29.

In the event that an accident should occur involving an impact with a pedestrian, the safety device will be deployed. As described above, each housing 2 will rupture, permitting the sleeve 10 to expand. The cap 11 will move upwardly and the barbed prong 13 present on the cap 11 move upwardly to engage with the recess or socket 48, and the action of the barbed prong will prevent the end cap 11 from subsequently becoming disengaged from the recess or socket 48. As the housing 2 ruptures, so tension will be applied to the Bowden cable which will serve to rotate the catch 29 to a position in which the radial retainer arm 31 no longer has the end face thereof engaging the end wall 39 of the linear portion 35 of the hinge arm 34, thus effectively releasing the linear part 35 of the hinge arm, permitting the hinge arm to rotate, relative to the bracket 21, about the axis defined by the "T"-headed stud 27.

As the sleeves 10 continues to inflate, the sleeves 10 will extend upwardly, thus forcing the rearward part of the hood or bonnet upwardly. The hood or bonnet will then pivot about the conventional catch 47 provided at the front of the hood or bonnet. As the rear part of the hood or bonnet moves upwardly, with a virtual pivoting movement about an axis substantially coincident with the conventional catch 47. The hinge arm 34 of each hinge will pivot about the pivot axis 27, and the "T"-headed stud 27 will slide along the elongate slot 38. When the "T"-headed stud 27 reaches the other end of the elongate slot 38, further upward movement of the hood or bonnet will be prevented.

It is to be appreciated that as the rear part of the hood or bonnet rises, the rear part is not constrained to rise vertically. Because the "T"-headed stud can slide along the elongate slot 38, the hood or bonnet can actually effect a virtual pivoting movement which is about an axis substantially coincident with the conventional catch 47 provided at the front of the hood or bonnet. A typical conventional catch can tolerate movement of this type without breaking, and the movement is such that no hard part of the underlying chassis of the vehicle is revealed during the movement.

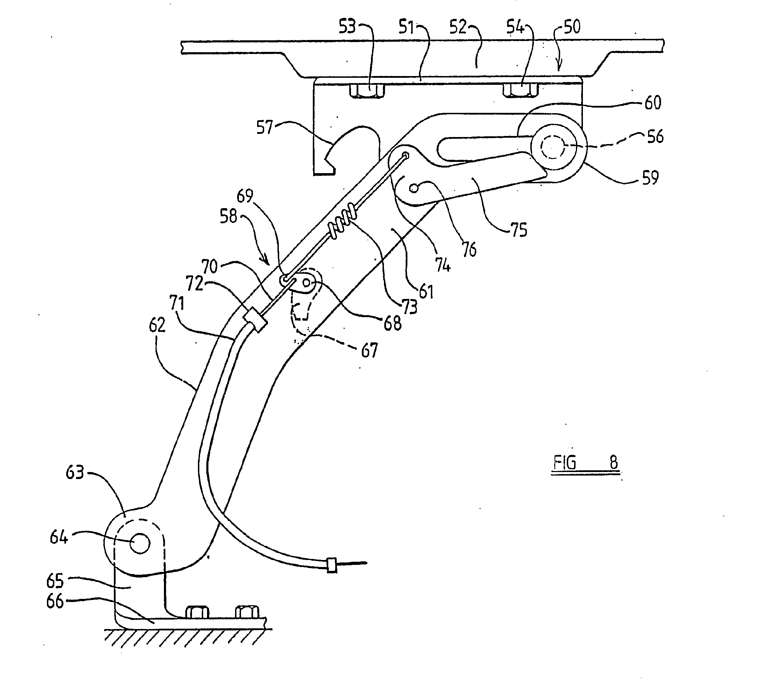

Referring now to Figures 7 and 8, an alternative hinge structure is illustrated.

The basic design of the hinge structure is extremely similar to that of the hinge of Figures 4 to 6.

Referring initially to Figure 7, a hinge assembly is illustrated in side view. Again, two hinge assemblies of this type will be utilised to secure a bonnet or hood of a motor vehicle to the main part of the vehicle.

The hinge assembly comprises a mounting bracket 50, of "L" section. The bracket 50 thus comprises a horizontal upper plate 51 which is secured to the bonnet 52 of the vehicle by means of two bolts 53, 54. The bracket incorporates a depending plate 55 which depends from one edge of the plate 51, the depending plate having, at one end thereof, a horizontally extending pin or "T" headed stud 56. At the other end of the plate a recess 57 is defined which will, as will be described below, co-operate with a catch. The recess has an opening in the lower edge of the depending plate 55.

A hinge arm 58 is provided, the hinge arm being of elongate form. The hinge arm has a first terminal region 59 provided with an elongate slot 60 therein, the axis of the slot being co-aligned with the axis of the terminal region 59.

The terminal region 59 is provided adjacent one end of a linear region 61 which is connected by a curved region 62 of the hinge arm to a second terminal region 63. The second terminal region 63 is provided with an aperture therein which receives a pivot pin 64. The pin 64 provides a pivotal support for the hinge arm 58. The pin 64 is mounted on a bracket 65 which itself is mounted on the main part 66 of the vehicle.

The hinge arm 58 carries a catch member 67 which is pivotally connected, by means of a pivot pin 68 to the linear portion 61 of the hinge arm 58. The push-pin 68 is provided with a radially extending actuating arm 69. The catch member 67 is on one side of the linear portion and the actuating arm 69 is on the other side. Connected to the actuating arm 69 is the core 70 of a Bowden cable 71, the sleeve of the Bowden cable 71 being retained by an apertured lug 72 which is mounted on the hinge arm 58. Tension applied to the Bowden cable 71 will tend to rotate the catch member 67.

Also connected to the radially extending arm 69 is one end of a tension spring 73. The other end of the spring 73 is connected to an actuating lug 74 provided at one end of a locking arm 75. The locking arm 75 is of elongate form, and is pivotally mounted, by pivot 76, to the linear part 61 of the hinge arm 58. The pivot 76 is at the end of the aim 75 that has the activating lug 74. The configuration of the actuating lug 74 and the locking arm 75 is such that tension applied to the lug by the spring 73 will tend to cause the locking arm to rotate about the pivot 76. The locking arm 75 is located in position such that the locking arm may be in engagement with the head of the "T" headed stud 56.

When the hinge is in its normal or undeployed condition the catch member 67 carried by the hinge arm 58 is received within the recess 57 defined in the depending plate 55. The configuration of the recess 57 is such that when the catch member is in an initial position, that part of the hinge arm adjacent the catch member cannot move upwardly, because engagement of part of the catch member with the corresponding part of the recess and also cannot move downwardly, again because of engagement between part of the catch member and the corresponding part of the recess. Thus the hinge arm is held fast with the depending plate 55 enabling the hood or bonnet 52 to be opened in a conventional manner about a pivot axis defined by the pivot pin 64.

Again, when the hinge assembly is in its initial condition the "T" headed stud 56 is at the end of the oval slot 60 which lies adjacent to the linear portion 61 of the hinge arm 58. The "T" headed stud 56 engages the locking arm 75 in the region where the locking arm and the actuating lug 74 merge. The locking arm 75 extends substantially parallel with the oval slot 60.

When tension is applied to the core of the Bowden cable, as a consequence of actuation of a canister as shown in Figures 1 to 3 which is connected to the Bowden cable, the catch member 67 will pivot about the pivot axis 68, thus positioning the catch member in such a way relative to the recess 57 that the catch member may move downwardly out of the recess from the position illustrated in Figure 7, thus enabling the hinge assembly to move towards the condition illustrated in Figure 8. Simultaneously tension is applied to the spring 73, since the actuating arm 69 will have pivoted in such a sense as to apply tension to the spring 73. Consequently, a spring force is applied to the locking arm 75 thus urging the arm 75 firmly into engagement with the "T" headed stud 56.

As the rear part of the hood or bonnet 52 which is connected to the hinge assembly moves upwardly, again in consequence of the deployment of a canister such as that shown in Figures 1 to 3, the hinge arm 58 will pivot about the axis defined by the pivot pin 64, and, as in the previously described embodiment, the "T" headed stud 56 will tend to slide along the elongate slot 60 towards the end thereof adjacent the termination of the terminal region 59 of the hinge arm 58.

When the "T" headed stud 56 does reach the terminal end of the slot 60, the locking arm 75 may rotate slightly so that the very end of the locking arm engages the "T" headed stud 56 thus preventing the "T" headed stud 56 from sliding back along the slot. Thus the locking arm serves to lock the rear part of the hood or bonnet in the fully elevated condition.

Following deployment of the canister as shown in Figures 1 to 3, when the inflatable sleeve 10 deflates, which will occur after a predetermined period of time, the lugs 6 and 7 resiliently return to their initial relative position, and tension will no longer be applied to the core 70 of the Bowden cable 71. Thus the tension applied to the spring 73 will be reduced. The weight of the bonnet acting downwardly will then be sufficient to enable the force applied by the "T" headed stud 56 to the end of the locking arm 75 to return the locking arm towards its initial position in which the locking arm extends generally parallel with the elongate slot 60, thus enabling the "T" headed stud 56 to slide along the slot back to the initial position. The hood or bonnet will thus, under the influence of gravity, return to the initial lowered position.

Consequently, should the safety device be triggered inappropriately, or should the vehicle continue along the road after the safety device has been actuated, the hood or bonnet will not remain elevated for a protracted period of time, but instead the hood or bonnet will automatically return to the lowered position. Thus, if the view of the driver is obscured while the bonnet is in the elevated position, the bonnet will only obscure the view for a minimum period of time.

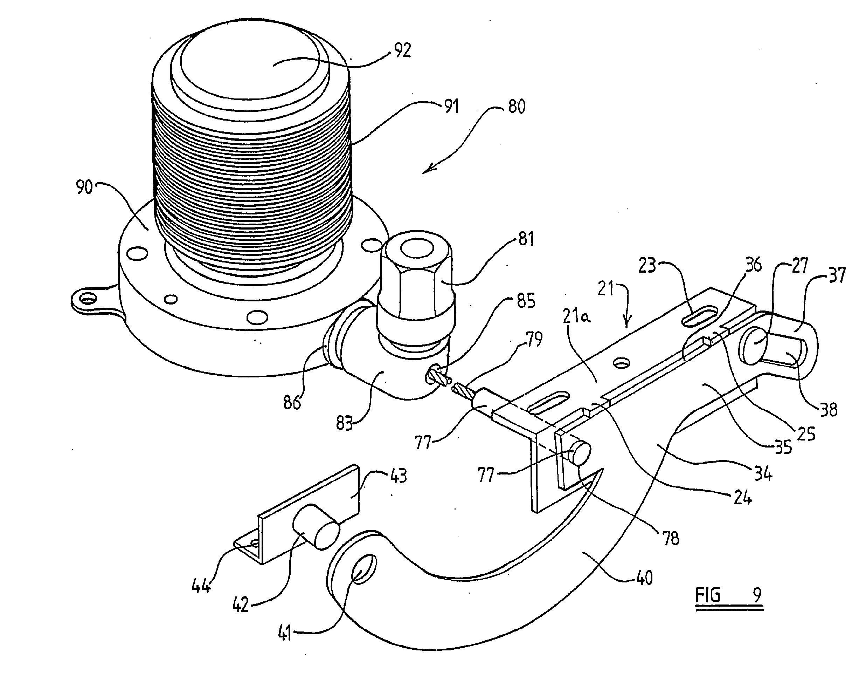

Figure 9 shows a hinge structure in a safety device, which is described with reference to Figures 9 to 11. The basic design of a hinge structure is extremely similar to that of the hinge of figures 4 to 6, and like parts are identified by like reference numbers and will not be re-described here. Two hinges of the type illustrated in Figure 9 will be utilised to secure a bonnet or hood of a motor vehicle to the main part of the vehicle.

In the embodiment shown in Figures 9 to 11, the rotatable catch element 29 has been replaced by a retractable pin 77, which initially extends through an aperture 78 formed in the linear part 35 of the hinge arm 34, to releasably secure the hinge arm to the bracket. The retractable pin 77 is connected by a wire 79 to a release mechanism and hood or bonnet lifting arrangement shown generally at 80, in such a way that on actuation of the hood or bonnet lifting arrangement tension is applied to the wire 79 to move the pin 77 to release the hinge arm 34 from the bracket 20.

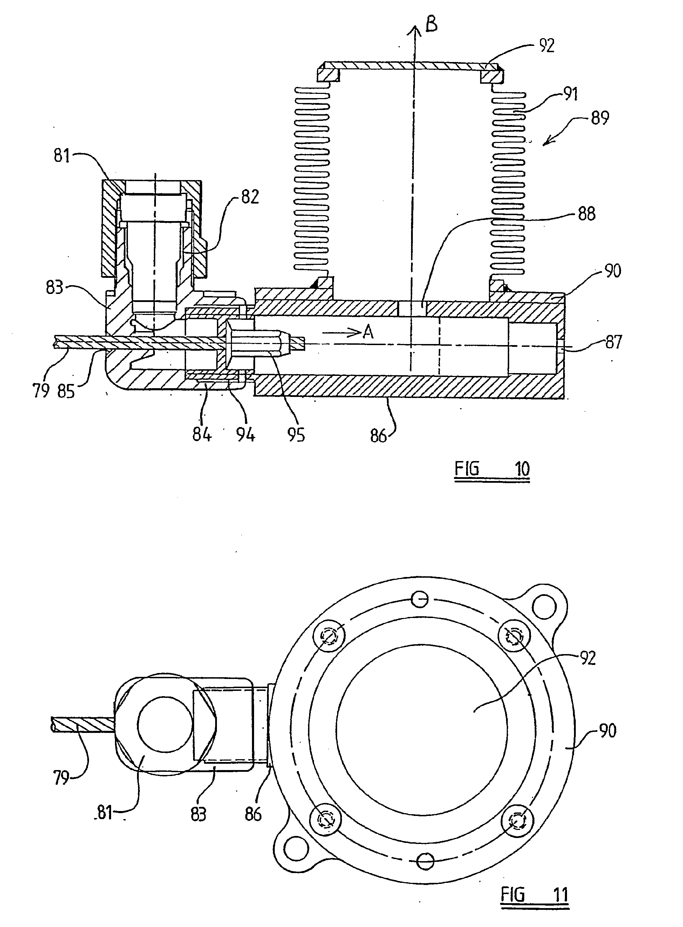

The release mechanism and hood or bonnet lifting mechanism is shown more clearly in Figure 10. The release mechanism incorporates a gas generator 81 which is connected to the end of one tubular arm 82 of a hollow "L"-shaped housing 83. The housing 83 has a second tubular arm 84, and at the base of the first arm, at a point opposite the second arm 84, there is a small aperture 85, the purpose of which will become clear from the following description.

A tubular cylinder 86 of a piston and cylinder arrangement has one end connected to the open end of the second arm 84 of the housing 83. The second end of the cylinder 86 is substantially closed but has an aperture 87 formed in it. A further aperture 88 is located on a side wall of the cylinder 86 approximately mid-way between the two opposed ends of the cylinder.

An expandable bellows 89 is mounted on the cylinder 86. The bellows 89 has an annular base plate 90 directly mounted on the cylinder. The lower end of a metallic concertina-folded cylindrical sleeve 91 is secured to the annular base plate 90. The top of the sleeve 91 is sealed by a cover disc 92. The bellows 89 is positioned relative to the cylinder unit so that the central axis of the sleeve 91 is substantially aligned with the aperture 88 formed in the side wall of the cylinder 86 so that the aperture 88 communicates with the interior of the sleeve 91.

The end of the wire 79 which is remote from the retractable pin 77 extends into the hollow "L" shaped housing 83 by passing through the small aperture 85 which is formed in the base of the first arm 82. The wire 79 is a substantially gas-tight fit within the aperture 85.

The wire 79 is connected to a piston 94 by a crimp 95. The piston 94 is mounted in the cylinder 86 as a gas-tight sliding fit. The piston is initially positioned at the first end of the cylinder 86, that is at the end of the cylinder which is closest to the gas generator 81.

In response to certain pre-determined conditions, for example, in response to a frontal collision, a signal is sent to the gas generator 81, causing the gas generator 81 to generate and discharge gas. The gas will pass through the hollow housing 83 and into the cylinder 86, causing the piston 94 to move from its initial position in a direction shown by the arrow marked "A". As the piston moves, tension will be applied to the wire 79 and hence to the retractable pin 77. As the piston 94 moves along the cylinder 86 the retractable pin 77 will be pulled out of the aperture 78 formed in the hinge arm 34. The hinge arm 34 is thus free to rotate relative to the bracket 21 about the axis defined by the "T"-headed stud 27. The stud 27 may also move along the slot 38.

As the piston 94 moves along the cylinder 86, gas or air trapped in front of the piston 94 will be expelled through the aperture 87 formed in the second end wall of the cylinder 86. As the piston 94 continues to move along, it will pass the aperture 88 formed in the top wall of the cylinder 86. This will result in gas being directed through the aperture 88 and into the sleeve 91 of the bellows 89.

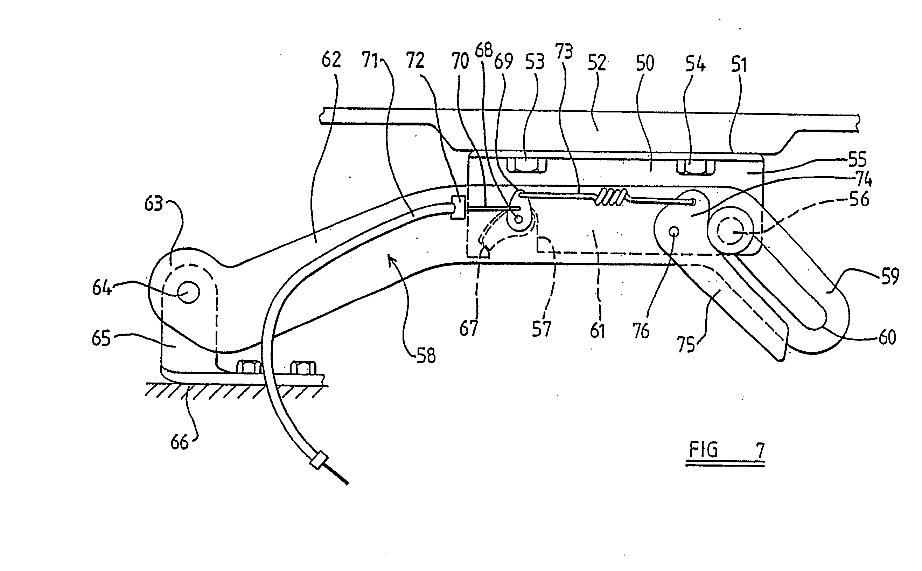

The metallic concertina-folded expandable sleeve 91 will expand upwardly and deform plastically. The cover disc 92 will thus be moved in the direction shown by the arrow marked "B", and will press against the underside of the hood or bonnet of the vehicle to which the safety device is mounted. Hence the hood or bonnet will be lifted in a manner similar to that shown in Figure 6.

As the rear part of the hood or bonnet is forced upwardly, with a virtual pivotal movement, the hood or bonnet will pivot about the conventional catch 47 provided at the front of the hood or bonnet. The hinge arm 34 of the hinge will pivot about the pivot axis 42, and the "T"-headed stud 27 will slide along the elongate slot 38. When the "T"-headed stud 27 reaches the other end of the elongate slot 38, further upward movement of the hood or bonnet will be prevented.

Because the "T"-headed stud can slide along the elongate slot 38, the hood or bonnet can again effect a virtual pivoting movement which is about an axis substantially coincident with the conventional catch 47 provided at the front of the hood or bonnet.

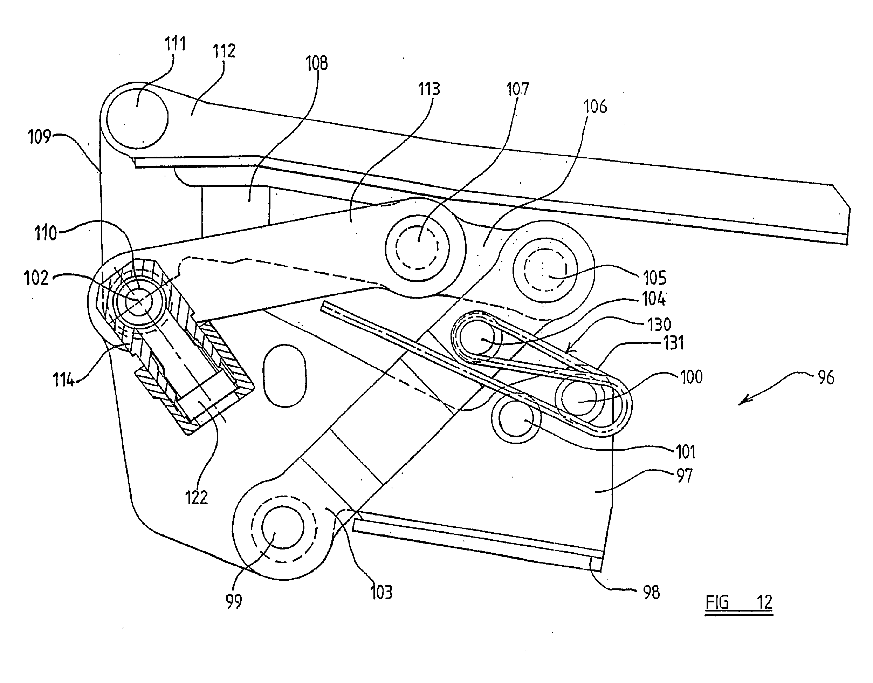

Figures 12 to 14 show a yet further hinge structure.

The further hinge, shown generally at 96, is provided with a generally rectangular vertical support plate 97. The support plate 97 may be mounted to the main part of a vehicle by a flanged portion 98 formed along part of the lower edge of the support plate 97.

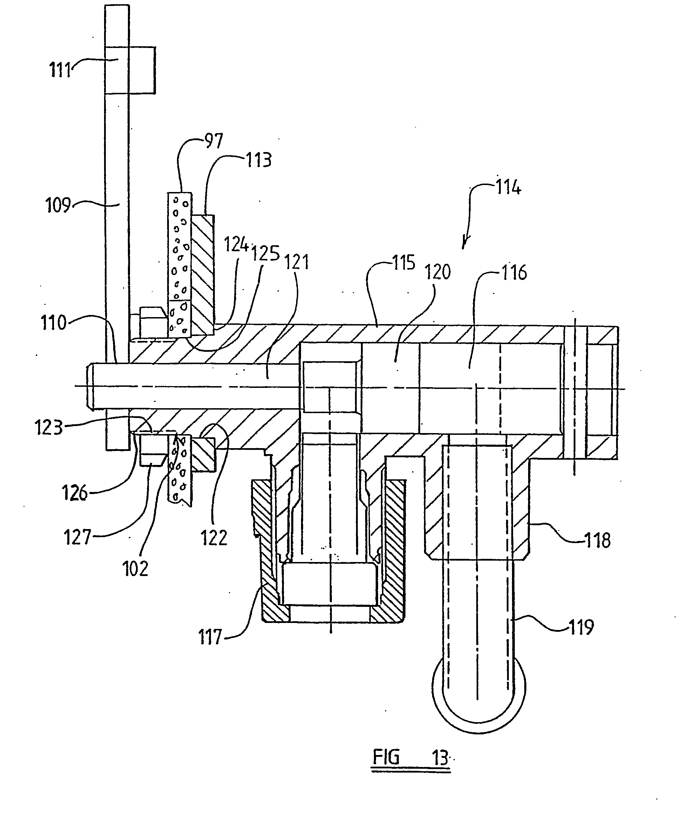

A first transversely extending pivot pin 99 protrudes from the lower side edge of the support plate 97. Two further spaced-apart transversely extending guide posts 100, 101 (provided for a purpose which will be described below) are formed at an upper corner of the support plate 97. A circular aperture 102 (see Figure 13) is formed in the other top corner of the support plate 97.

A first elongate hinge arm 103 has a first end thereof pivotally connected to the support plate 97 by the pivot pin 99. At a point spaced from the other end of the first hinge arm there is a transversely extending guide post 104 (provided for a purpose which will be described below). The second end of the first hinge arm 103 is pivotally connected by pivot 105 to a first end of a second elongate hinge arm 106. The second hinge arm carries a pivot pin 107 adjacent the first end thereof. The second hinge arm 106 has a cranked region 108 formed close to the second end thereof so that the second end of the second hinge arm lies behind the support plate 97 as seen in Figure 12. The second end of the second hinge arm 106 is formed as a "T"-shaped head portion 109 having two spaced-apart ends. A hole 110 is formed at the first end of the "T"-shaped portion 109. The second end of the "T"-shaped region is pivotally connected by a pivoted connection 111 to a hood or bonnet 112.

An elongate guide arm 113 has one end thereof pivotally connected to the pivot pin 107 on the second hinge arm 106. The second end of the guide arm 113 is pivotally mounted to the base plate 97 by part of the housing of a piston and cylinder unit 114, as shown most clearly in Figure 13.

The piston and cylinder unit 114 comprises a main cylindrical body part 115 which defines a hollow cylinder 116. A gas generator 117 is mounted to the main body part 115 to supply gas to one end of the cylinder. An outlet port 118 is provided adjacent the other end of the cylinder, the outlet port 118 being connected to a conduit 119 which extends to an expandable bellows, similar to the bellows 89 described above.

Contained within the cylinder 116 is a piston 120. The piston is connected to a rod 121 which emerges from the cylinder 116 through an extension of the housing 115, the extension comprising a first portion 122 having a diameter less than the diameter of the main body portion of the housing 115, and a second terminal portion 123 having a diameter less than that of the first portion 122. Thus two "steps" are created, a first "step" 124 being created between the main body portion 115 and the commencement of the first part 112 of the extension, and a second "step" 125 being created between the first portion of the extension and the second portion of the extension. The end part of the second portion of the extension is threaded 126.

The first portion 122 of the extension is received within an aperture formed in the second end of the guide arm 113. The aperture is dimensioned so that the guide arm 113 may pivot or rotate about the first portion 122 of the extension. The second portion of the extension passes through the aperture 102 in the mounting plate 97. Part of the mounting plate 97 abuts against the second "step" 125. A nut 127 is mounted on the threaded end 126 of the extension and securely engages the mounting plate 97 so that the mounting plate 97 is firmly trapped between the nut 127 and the second "step" 125. The distance between the first "step" 124 and the second "step" 125 is such that the mounting plate 97 does not frictionally engage the guide arm 113 so that the guide arm 113 is free to pivot.

In an initial condition of the hinge, as shown in Figure 12, the rod 121 connected to the piston 120 emerges from the housing 115 and passes through the hole 110 formed at one end of the "T"-shaped head 109 provided at the end of the second hinge arm 106. Thus the second hinge arm 106 is retained, by the catch constituted by the rod 121, in an initial position relative to the base plate 97.

The hinge 96 is provided with an energy-absorbing arrangement constituted by a deformable rod 130. The rod 130 has a first end 131 thereof securely connected to the base plate 97. The rod 130 is then looped around the guide post 104 provided on the first hinge arm 103, and then back around the first guide post 100 provided on the base plate 97, then passing between the first guide post 100 and the second guide post 101. A straight portion of the rod 130 extends away from the posts 100, 101.

In response to a predetermined condition, for example in response to a frontal collision, a signal is sent to the gas generator 117, causing the gas generator to generate and discharge gas. The gas will enter one end of the cylinder 116, causing the piston 120 to move along the cylinder. As the piston 120 moves along the cylinder so the pin 121 will be retracted, thus being withdrawn from the aperture 110 within the "T"-shaped head portion 109 provided on the second hinge arm 106. The second hinge arm is thus released.

As the piston 120 continues to move within the cylinder 116, the piston will move beyond the outlet port 118 and gas will then flow through the outlet port 118 through the associated pipe 119 into the bellows unit, causing the bellows unit to become inflated and raise the rear part of the hood or bonnet.

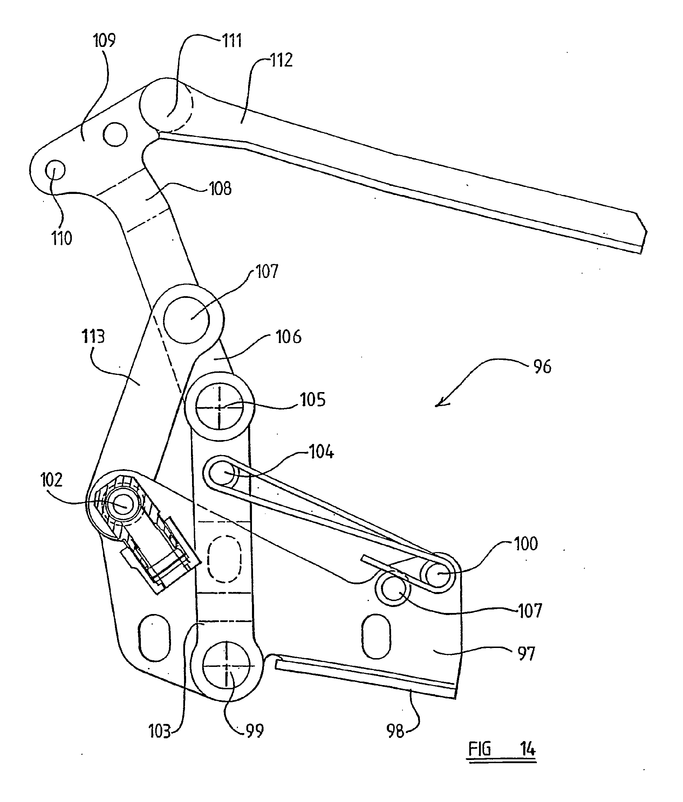

As the pin 121 has been withdrawn from the aperture 110, the hinge arms 103, 106 are capable of movement about their respective pivots. The hinge arms thus move upwards towards the final condition illustrated in Figure 14, the movement of the hinge arms being guided by the guiding effect of the guide arm 113.

It is thus to be appreciated that the first pivot arm 103 pivots about the pivot pin 99 connected to the base plate 97. The second pivot arm 106 pivots about the pivotal connection between the second pivot arm and first pivot arm 103. The hood or bonnet 112 pivots about the pivotal connection 111 provided on the "T"-shaped head portion 109 of the second hinge arm 106. The guide arm 113 pivots about the pivot pin 107 on the second hinge pin 106, and also pivots about the first extension 112 provided on the housing 115 of the piston and cylinder unit 114.

As the hinge arms 103, 106 effect this movement, the guide post 104 is moved away from the base plate 97, and thus the deformable bar 130 becomes drawn past the guide posts 104, 100 and 101, the bar being deformed as it is drawn along. The bar is also deformed as it is drawn past the guide post 104. Thus energy is absorbed.

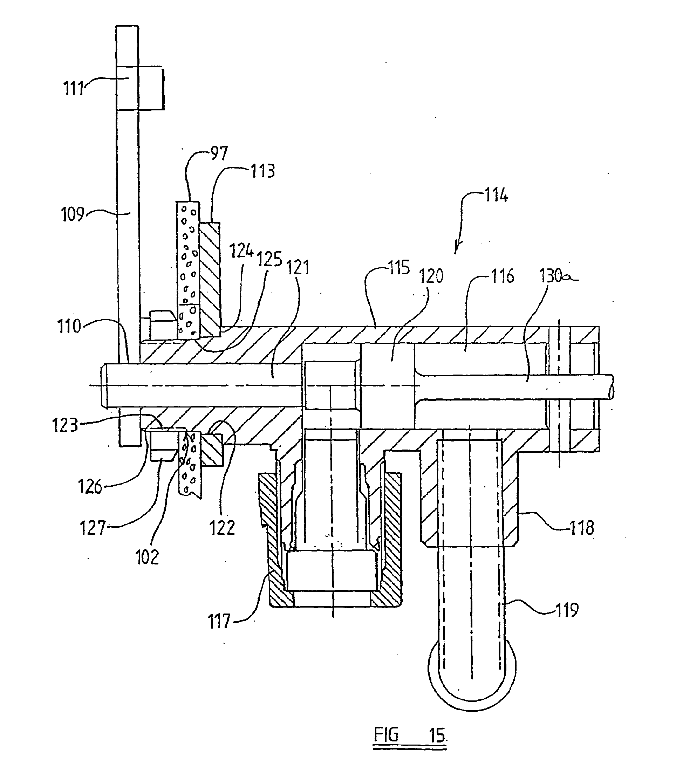

Figure 15 illustrates a modified embodiment which is very similar to that shown in Figure 13. Like parts are identified by like references and will not be re-described.

In the embodiment of Figure 15 the piston 120 is provided with a second piston rod 130a which extends through an aperture provided in the end of the main cylindrical body part 115 of the piston and cylinder unit 114 that is remote from the extension comprising the first portion 122 and the terminal portion 123.

When the piston and cylinder unit is in the initial condition as shown in Figure 15, the second piston rod 130a only extends very slightly beyond the end of the main housing part 115. However, it is to be understood that on actuation of the illustrated device, the piston 120 will move towards the right, as shown in Figure 15, and then more of the second piston rod 130a will project beyond the end of the main body part 115 of the housing. It is to be understood that when the described device has been actuated, and is to be re-set, the piston 120 may be returned to its initial position simply by pressing on the exposed second piston rod 130a, and a fresh gas generator 117 may be mounted in position on the piston and cylinder unit 114.

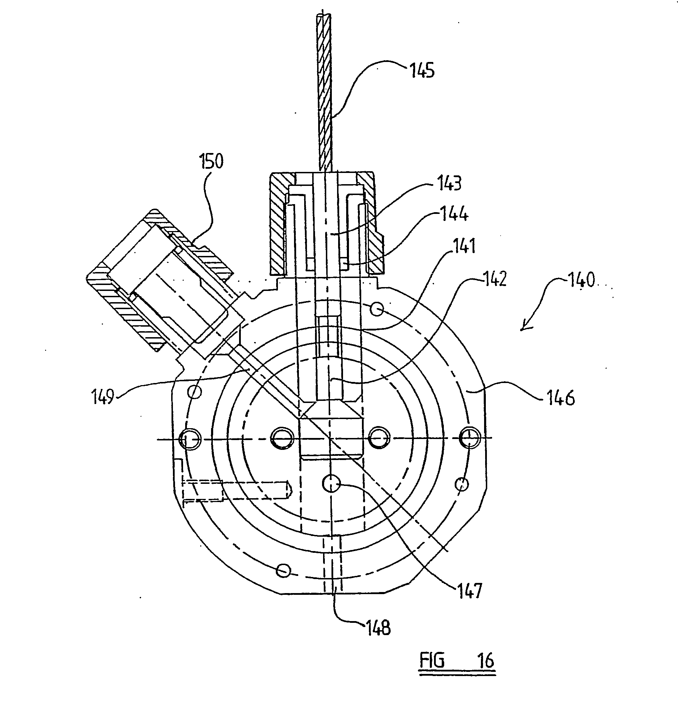

Figure 16 is a sectional view of a further piston and cylinder unit with an associated gas generator. As shown in Figure 16, a piston and cylinder unit 140 defines a cylinder 141 which receives a piston 142, the piston having a piston rod 143 which extends through a seal 144 provided at one end of the cylinder 141, the rod being connected to a wire or cable 145. The cylinder 141 is formed in a housing which incorporates a mounting plate 146 which may firstly mount the piston and cylinder unit in position, and which may secondly connect a bellows, of the type described above, to the piston and cylinder unit. The cylinder 141 is provided with an aperture 147 which can communicate with the interior of a bellows. The end of the cylinder 141 which is remote from the seal 144 is provided with a gas exhaust duct 148 to enable the piston to move over a complete stroke within the cylinder.

The cylinder is associated with a gas inlet duct 149, one end of which makes an acute angle with the axis of the cylinder. The other end of the gas inlet duct communicates with a gas-generator 150. The gas inlet duct is configured to open into the cylinder on the side of the head of the piston that is closest to the seal 144. Thus gas moving along the gas flow duct 149 is directed on to the head of the piston, imparting a substantial momentum to the piston to drive the piston along the cylinder. As the piston moves along the cylinder so a force is applied to the wire or cable 145. Once the piston or cylinder has moved to such an extent that the piston or cylinder head is beyond the aperture 147, gas will flow from the gas generator 150 into the bellows. The requirements for the seal 144 are less, in the described embodiment, than in the previously described embodiments in which the gas flow from the gas generator enters the cylinder along a line that is substantially perpendicular to the axis of the cylinder.

In the present Specification "comprises" means "includes or consists of" and "comprising" means "including or consisting of".

## Claims

1. A safety device to lift the rear part of the hood or bonnet (45) of a motor vehicle, the safety device including a pivotal connection for connecting the rear part of the hood or bonnet (45) to the main part of the vehicle to permit the front part of the hood or bonnet (45) to be opened, part of the pivotal connection being formed on a hinge arm (34) incorporated in a hinge extending between a mount (21) to be mounted on a hinge or bonnet (45) and a mount (43) to be mounted on the main part of the vehicle, there being a catch (29) to retain the hinge arm (34) in a first condition relative to one mount (21), the safety device further incorporating a lifting element (1) to lift the rear part of the head or bonnet (45), the lifting element (1) comprising an inflatable element (10), there being a gas generator to generate gas to actuate the lifting element (1) by inflating the inflatable element (10) and a mechanism to release the catch (29) directly in response to the generation of gas so that the hinge arm (34) can move relative to the mount (21) to permit the rear part of the hood or bonnet (45) to be raised when the lifting element (1) is actuated, **characterised in that** the lifting element comprises a canister (1), there being two lugs (6,7) provided on the canister (1), the lugs (6,7) being adapted to become separated in response to actuation of the lifting element, said catch (29) being released as a consequence of the movement of the lugs (6,7).

2. A safety device according to Claim 1 wherein the catch (29) incorporates a moveable element (30), the moveable element (30) being moveable directly in response to the generation of gas, as a consequence of the movement of the lugs (6,7).

3. A safety device according to Claim 2 wherein a Bowden cable (17) is provided, the Bowden cable (17) having a core (18) thereof extending through said two lugs (6,7), so as to apply tension to the Bowden cable (17) when the lugs (6,7) become separated, one end of the Bowden cable (17) being connected to the moveable element (30).

4. A safety device according to Claim 3 wherein the other end of the Bowden cable (17) is attached to a manually actuable lever.

5. A safety device according to any one preceding claim wherein the canister (1) contains an inflatable sleeve (10), the side wall of the canister (1) defining at least one line of weakness (3) passing between said two lugs (6,7), the arrangement being such that in response to inflation of the sleeve (10) the canister (1) ruptures and the lugs (6,7) move apart.

6. A safety device according to any one of the preceding Claims wherein the hinge has a single hinge arm (34) extending between the said two mounts (21,43), one arm of the hinge (34) being connected to one mount (21) by means of a co-operating stud (27) and slot (38), the catch (30) retaining that end of the hinge arm (34) in a predetermined position relative to the said one mount (21), the other end of the hinge arm being pivotally connected to the other mount (43).

7. A safety device according to Claim 6 wherein the slot (38) is provided on the hinge arm (34) and the stud (27) is provided on the mount (21).

8. A device according to Claim 6 or 7 wherein a resiliently biased locking arm (75) is provided, the locking arm (75) being moveable from an initial position to a locking position when the stud (56) is moved to one end of the slot (60), the arm (75), in the locking position, serving to retain the stud (56) at that one end of the slot (60).

9. A device according to Claim 8 wherein the locking arm (75) is spring biased by a tension spring (73), part of the tension spring (73) being connected to the catch (67) such that tension is applied to the spring (73) when the catch (67) is moved to the release position.

10. A safety device according to any one of the preceding Claims wherein the catch (29,67) is a rotatable catch.

11. A safety device according to Claim 10 as dependent upon Claim 3 wherein the rotatable catch is connected to the Bowden cable (17).

## Patentansprüche

1. Eine Schutzvorrichtung zum Anheben des hinteren Teils der Motorhaube (45) eines Kraftfahrzeugs, wobei die Schutzvorrichtung eine zentrale Verbindung zum Anschluss des hinteren Teils der Motorhaube (45) mit dem Hauptteil des Fahrzeugs beinhaltet, um ein Öffnen des vorderen Teils der Motorhaube (45) zu ermöglichen, wobei ein Teil der zentralen Verbindung an einem Scharnierarm (34) geformt ist, der in einem Scharnier integriert ist, das zwischen einer Halterung (21) zur Befestigung an einer Motorhaube (45) und einer Halterung (43) zur Befestigung am Hauptteil des Fahrzeugs verläuft, wobei ein Verriegelungshaken (29) zum Halten des Scharnierarms (34) in einem ersten Zustand relativ zu einer Halterung (21) vorhanden ist, wobei die Schutzvorrichtung außerdem ein Hubelement (1) enthält, um den hinteren Teil der Motorhaube (45) anzuheben, und das Hubelement (1) beinhaltet ein aufblasbares Element (10), wobei ein Gasgenerator zur Gaserzeugung zum Aktivieren des Hubelements (1) vorhanden ist, indem das aufblasbare Element (10) aufgeblasen wird, und ein Mechanismus dient zum Lösen des Verriegelungshakens (29) direkt als Reaktion zur Gaserzeugung, so dass sich der Scharnierarm (34) relativ zur Halterung (21) bewegen kann, um zu ermöglichen, dass der hintere Teil der Motorhaube (45) angehoben wird, wenn das Hubelement (1) aktiviert wird, **dadurch gekennzeichnet, dass** das Hubelement einen Kanister (1) beinhaltet, wobei sich am Kanister (1) zwei Vorsprünge (6, 7) befinden und diese Vorsprünge (6, 7) so adaptiert wurden, dass sie als Reaktion auf die Aktivierung des Hubelements getrennt werden, wobei der besagte Verriegelungshaken (29) als Folge der Bewegung der Vorsprünge (6, 7) gelöst wird.

2. Eine Schutzvorrichtung nach Anspruch 1, wobei der Verriegelungshaken (29) ein bewegliches Element (30) enthält, wobei das bewegliche Element (30) direkt als Reaktion auf die Gaserzeugung als Folge der Bewegung der Vorsprünge (6, 7) beweglich ist.

3. Eine Schutzvorrichtung nach Anspruch 2, in der sich ein Bowdenzug (17) befindet, wobei dieser Bowdenzug (17) einen Kern (18) enthält, der durch die beiden besagten Vorsprünge (6, 7) verläuft, um eine Spannung auf den Bowdenzug (17) aufzutragen, wenn die Vorsprünge (6, 7) getrennt werden, wobei ein Ende des Bowdenzugs (17) am beweglichen Element (30) angeschlossen ist.

4. Eine Schutzvorrichtung nach Anspruch 3, wobei das andere Ende des Bowdenzugs (17) an einem manuell aktivierbaren Hebel angebracht ist.

5. Eine Schutzvorrichtung nach einem beliebigen vorangehenden Anspruch, wobei der Kanister (1) eine aufblasbare Hülse (10) enthält, wobei die Seitenwand des Kanisters (1) mindestens eine Linie einer Schwachstelle (3) definiert, die zwischen den beiden besagten Vorsprüngen (6, 7) verläuft, wobei die Anordnung dementsprechend ist, dass der Kanister (1) als Reaktion auf das Aufblasen der Hülse (10) zerbricht und sich die Vorsprünge (6, 7) auseinander bewegen.

6. Eine Schutzvorrichtung nach einem beliebigen vorangehenden Anspruch, wobei das Scharnier einen einzelnen Scharnierarm (34) hat, der zwischen den beiden besagten Halterungen (21, 43) verläuft, wobei ein Arm des Scharniers (34) mithilfe einer zusammenwirkenden Stiftschraube (27) und einem Schlitz (38) mit einer Halterung (21) angeschlossen ist, wobei der Verriegelungshaken (30) das Ende des Scharnierarms (34) in einer vorbestimmten Position relativ zu der einen besagten Halterung (21) hält, wobei das andere Ende des Scharnierarms zentral an der anderen Halterung (43) angeschlossen ist.

7. Eine Schutzvorrichtung nach Anspruch 6, in der sich der Schlitz (38) am Scharnierarm (34) und die Stiftschraube (27) an der Halterung (21) befindet.

8. Eine Vorrichtung nach Anspruch 6 oder 7, in der sich ein elastischer Verriegelungsarm (75) befindet, wobei der Verriegelungsarm (75) von einer ursprünglichen Position in eine Verriegelungsposition bewegt werden kann, wenn die Stiftschraube (56) an ein Ende des Schlitzes (60) bewegt wird, wobei der Arm (75) in der Verriegelungsposition ist, was zum Halten der Stiftschraube (56) an diesem einen Ende des Schlitzes (60) dient.

9. Eine Vorrichtung nach Anspruch 8, in der der Verriegelungsarm (75) durch eine Zugfeder (73) federbelastet ist, wobei ein Teil der Zugfeder (73) so am Verriegelungshaken (67) angeschlossen ist, dass eine Spannung auf die Feder (73) aufgetragen wird, wenn der Verriegelungshaken (67) zur Lösungsposition bewegt wird.

10. Eine Schutzvorrichtung nach einem beliebigen vorangehenden Anspruch, wobei der Verriegelungshaken (29, 67) ein drehbarer Haken ist.

11. Eine Schutzvorrichtung nach Anspruch 10, abhängig von Anspruch 3, wobei der drehbare Verriegelungshaken am Bowdenzug (17) angeschlossen ist.

## Revendications

1. . Dispositif de sécurité pour lever la partie arrière du capot (45) d'un véhicule à moteur, le dispositif de sécurité incluant une liaison pivotante pour relier la partie arrière du capot (45) à la partie principale du véhicule pour permettre l'ouverture de la partie avant du capot (45), une partie de la liaison pivotante étant formée sur un bras d'articulation (34) incorporé dans une articulation se trouvant entre une monture (21) destinée à être montée sur un capot (45) et une monture (43) destinée à être montée sur la partie principale du véhicule, un loquet (29) étant prévu pour retenir le bras d'articulation (34) dans un premier état par rapport à la monture (21) du capot, le dispositif de sécurité incorporant de plus un élément de levage (1) pour lever la partie arrière du capot (45), l'élément de levage (1) comprenant un élément gonflable (10), un générateur de gaz étant prévu pour engendrer du gaz de façon à actionner l'élément de levage (1) en gonflant l'élément gonflable (10) et un mécanisme pour libérer le loquet (29) directement en réponse à la production de gaz de sorte que le bras d'articulation (34) peut se déplacer par rapport à la monture (21) pour permettre à la partie arrière du capot (45) d'être surélevée quand l'élément de levage (1) est actionné,
**caractérisé en ce que** l'élément de levage comprend une boîte (1), deux pattes (6, 7) étant prévues sur la boîte (1), les pattes (6, 7) étant conçues pour se séparer en réponse à l'actionnement de l'élément de levage, ledit loquet (29) étant libéré à la suite du mouvement des pattes (6, 7).

2. . Dispositif de sécurité selon la revendication 1, dans lequel le loquet (29) incorpore un élément mobile (30), l'élément mobile (30) étant déplaçable directement en réponse à la production de gaz, à la suite du mouvement des pattes (6,7),

3. . Dispositif de sécurité selon la revendication 2, dans lequel un câble Bowden (17) est prévu, le câble Bowden (17) ayant une âme (18) s'étendant à travers lesdites deux pattes (6, 7), de façon à appliquer une tension au câble Bowden (17) quand les pattes (6, 7) se séparent, une extrémité du câble Bowden (17) étant reliée à l'élément mobile (30).

4. . Dispositif de sécurité selon la revendication 3, dans lequel l'autre extrémité du câble Bowden (17) est attachée à un levier actionnable manuellement.

5. . Dispositif de sécurité selon une quelconque revendication précédente, dans lequel la boîte (1) contient un manchon gonflable (10), la paroi latérale de la boîte (1) définissant au moins une ligne de faiblesse (3) passant entre lesdites deux pattes (6, 7), l'agencement étant tel que, en réponse au gonflage du manchon (10), la boîte (1) se rompt et les pattes (6, 7) s'écartent.

6. . Dispositif de sécurité selon une quelconque des revendications précédentes, dans lequel l'articulation a un bras d'articulation unique (34) s'étendant entre lesdites deux montures (21, 43), un bras de l'articulation (34) étant relié à la monture (21) du capot par l'intermédiaire d'un ergot (27) et d'une fente (38) qui coopèrent, le loquet (30) retenant cette extrémité du bras d'articulation (34) dans une position prédéterminée par rapport à ladite monture (21) du capot, l'autre extrémité du bras d'articulation étant reliée de façon pivotante à l'autre monture (43).

7. . Dispositif de sécurité selon la revendication 6, dans lequel la fente (38) est prévue sur le bras d'articulation (34) et l'ergot (27) est prévu sur la monture (21) du capot.

8. . Dispositif de sécurité selon la revendication 6 ou 7, dans lequel un bras de blocage sollicité de façon élastique (75) est prévu, le bras de blocage (75) étant mobile d'une position initiale vers une position de blocage quand l'ergot (66) est déplacé vers une extrémité de la fente (60), le bras (75) dans la position de blocage, servant à retenir l'ergot (56) au niveau de cette extrémité de la fente (60).

9. . Dispositif de sécurité selon la revendication 8, dans lequel le bras de blocage (75) est sollicité par un ressort de traction (73), une partie du ressort de traction (73) étant reliée au loquet (67) de telle sorte que la traction soit appliquée au ressort (73) quand le loquet (67) est déplacé vers la position de libération.

10. . Dispositif de sécurité selon une quelconque des revendications précédentes, dans lequel le loquet (29, 67) est un loquet pouvant tourner.

11. . Dispositif de sécurité selon la revendication 10 quand elle dépend de la revendication 3, dans lequel l'ergot pouvant tourner est relié au câble Bowden (17).
